# EUROPEAN PATENT APPLICATION

(11) **EP 2 966 601 A1**
(43) Date of publication of application: **13.01.2016**
(21) Application number: 14760360.9
(22) Date of filing: 10.02.2014
(51) Int. Cl.: G06Q 10/00, G06Q 50/10

(54) **COMPREHENSION ASSISTANCE SYSTEM, COMPREHENSION ASSISTANCE SERVER, COMPREHENSION ASSISTANCE METHOD, AND COMPUTER-READABLE RECORDING MEDIUM**

(30) Priority: 07.03.2013 JP 2013044977
(71) Applicant: NEC Solution Innovators, Ltd., Tokyo 136-8627 (JP)
(72) Inventor: HIROZAWA,Kazuki, Tokyo 136-8627 (JP)
(74) Representative: Betten & Resch
(86) International application number: PCT/JP2014/053058
(87) International publication number: WO 2014/136534

(57) **Abstract**

A comprehension assistance system 10 assists the comprehension of a hearing-impaired person who enjoys a service for taking notes. The comprehension assistance system 10 includes a comprehension assistance server 1, clients 2 for use by note-takers, a client 4 for use by a checker who checks notes taken by the note-takers, and a client 3 for use by the hearing-impaired person. A comprehension assistance server device 1 includes a text receiving unit 11 configured to receive, from the client 2, text data obtained by the notes by the note-takers, a text transmitting unit 17 configured to transmit the received text data to the client 4, and a data communication unit 16 configured to receive the checked text data from the client 4 and transmit the checked text data to the client 3.

## Description

### TECHNICAL FIELD

The present invention relates to a comprehension assistance system, a comprehension assistance server, and a comprehension assistance method that are for assisting the comprehension of a hearing-impaired person when the hearing-impaired person enjoys a service for note-taking of the speech of a speaker, and further relates to a computer-readable recording medium in which programs for realizing them are recorded.

### BACKGROUND ART

A hearing-impaired person who has the hearing level of -100 Decibel or more (hereinafter, referred to simply as "hearing-impaired person") in both ears hardly receive linguistic information in voice even with hearing aids or the like. It has thus conventionally been the case that when a hearing-impaired person attends lectures, school teachings, or the like, sign language interpreters or note-taking interpreters would be provided.

Of these, when note-taking interpreters are provided, two or more note-taking interpreters are usually provided for one hearing-impaired person in the case of, for example, the school teaching. Also, these note-taking interpreters use a PC (Personal Computer), a paper note, or the like to transcribe what the teacher is saying and present the transcription to the hearing-impaired person. Note that two or more note-taking interpreters are needed because the note-taking operation is an overloaded work and the summary accuracy tends to degrade with one note-taking interpreter.

Meanwhile, according to a survey conducted by the Health, Labour and Welfare Ministry in fiscal 2008, there are about twenty thousand hearing-impaired students aged 18 and below in the country, whereas the number of officially-registered note-taking interpreters in the country is about ten thousand. Moreover, if two or more note-taking interpreters attend one hearing-impaired student, the number of hearing-impaired students who can receive assistance is reduced to a quarter according to a simple calculation. Furthermore, there are regional differences in the number of note-taking interpreters and the number of hearing-impaired students. For these reasons, the current situation is such that only a fewer number of hearing-impaired students can receive assistance at school.

Therefore, various organizations offer training and the like in order to increase the number of note-taking interpreters. New note-taking interpreters are registered as note-takers after having developed their skills with a year of mandatory courses and training, and the like. However, there is the problem that the number of note-takers increases only slightly and a large number of students still cannot receive assistance.

On the other hand, in recent years, various techniques have been proposed in order to improve recognition accuracy in voice recognition (see, Patent Documents 1 to 3, for example). Therefore, it is conceivable to use the voice recognition technique to assist a hearing-impaired person in comprehending the oral explanation of lecturers.

For example, Patent Document 1 discloses an apparatus for assisting writing of voice into text. The apparatus disclosed in Patent Document 1 generates a synthesized voice from text data obtained by voice recognition or manual transcription, and extracts feature amounts of the generated synthesized voice and the pronounced original voice. Then, the apparatus disclosed in Patent Document 1 compares the feature amounts, and presents an error in the result of transcription based on the comparison result.

Patent Document 2 discloses an apparatus for automatically detecting an error in a voice recognition result. The apparatus disclosed in Patent Document 2 performs accumulation and learning of acoustic information based on a previous voice recognition result, generates a right or wrong discrimination model based thereon, and detects an error in the voice recognition result using the generated right or wrong discrimination model. Note that acoustic information refers to information that has feature amounts obtained by analysis in a time domain and a frequency domain, and in which right or wrong is discriminated for each minimum unit.

Patent Document 3 discloses an apparatus that corrects the caption for a presentation voice in real time. The apparatus disclosed in Patent Document 3 obtains, by voice recognition, one or more character string candidates and certainty factors for the character string candidates, and selects automatic determination or manual determination with respect to a first character string candidate that has the highest certainty factor while determining the current processing state. Furthermore, if automatic determination is selected, the apparatus automatically determines the final character string with respect to the first character string candidate. On the other hand, if manual determination is selected, the apparatus manually determines the final character string with respect to the first character string candidate, but if the determination was not possible, the apparatus compares a key word list with the undefined character string to calculate a matching score, and outputs a key word that serves as a correction result based on the matching score.

Patent Document 4 discloses an apparatus that enables a proofreader to perform proofreading using text data obtained by voice recognition and voice data used for the voice recognition. The apparatus disclosed in Patent Document 4 converts a series of emitted voices into a voice signal, divides the voice signal into a plurality of voice signals, and converts the voice signals into text data. Then, the apparatus disclose in Patent Document 4 reads out and outputs the voice signals and the text data that are associated with each other in a synchronized manner. The proofreader can execute proofreading based on the voice signals and the text data.

### LIST OF PRIOR ART DOCUMENTS

### PATENT DOCUMENT

Patent Document 1: JP 2001-134276A
Patent Document 2: JP 2002-268679A
Patent Document 3: JP 2007-256714A
Patent Document 4: JP 2004-240920A

### DISCLOSURE OF THE INVENTION

### PROBLEMS TO BE SOLVED BY THE INVENTION

However, in the apparatuses disclosed in Patent Documents 1 to 3, human check is not performed, and thus if a recognition result includes an error, it will be impossible to correct the error and present the corrected recognition result to a hearing-impaired person.

Furthermore, according to the apparatus disclosed in Patent Document 3, the recognition accuracy can be improved as compared to the case of the apparatuses disclosed in Patent Documents 1 and 2, but in order to do so, it is necessary to generate, at any time, a database for use in calculation of a match score for each field that is a recognition target. In this case, the apparatus cost is significantly high and thus it is difficult to use the apparatus at school and the like.

On the other hand, in the apparatus disclosed in Patent Document 4, checking is performed by a proofreader based on voices, but it is considered that the load of the proofreader is high since a recognition result may include an error. Accordingly, the recognition accuracy may vary depending on the degree of fatigue of the proofreader.

For the above-described reasons, the assistance by note-taking interpreters is required relative to the assistance by the voice recognition apparatuses, but as described above, it is difficult to further increase the number of note-taker/interpreters with a certain ability and to expand the assistance for hearing-impaired persons. Therefore, it is required to enable a larger number of hearing-impaired persons to be assisted by using a mechanism for mitigating the load on note-taking interpreters.

An example of an object of the present invention is to provide a comprehension assistance system, a comprehension assistance server, a comprehension assistance method, and a computer-readable recording medium that solve the above-described problems and can provide hearing-impaired persons with accurate information while mitigating the load on a person who performs note-taking.

### MEANS FOR SOLVING THE PROBLEMS

In order to achieve the above-described object, a comprehension assistance system according to the present invention is a system for assisting the comprehension of a hearing-impaired person who enjoys a service for note-taking of a speech of a speaker, the comprehension assistance system including:
a server device; a first client terminal for use by a note-taker who takes a note; a second client terminal for use by a checker who checks the note taken by the note-taker; and a third client terminal for use by the hearing-impaired person,
wherein the server device includes:
   a text receiving unit configured to receive, from the first client terminal, text data obtained by note-taking of the speech that was taken by the note-taker;
   a text transmitting unit configured to transmit the received text data to the second client terminal; and
   a data communication unit configured to receive the text data checked by the checker from the second client terminal, and transmit the checked text data to the third client terminal.

In order to achieve the above-described object, a comprehension assistance server of the present invention is a server for assisting the comprehension of a hearing-impaired person who enjoys a service for note-taking of a speech of a speaker, the comprehension assistance server including:
a text receiving unit configured to receive, from a first client terminal for use by a note-taker who takes a note, text data obtained by note-taking of the speech that was taken by the note-taker;
a text transmitting unit configured to transmit the received text data to a second client terminal for use by a checker who checks the note taken by the note-taker; and
a data communication unit configured to receive the text data that was checked by the checker from the second client terminal, and transmit the checked text data to a third client terminal for use by the hearing-impaired person.

Furthermore, in order to achieve the above-described object, a comprehension assistance method of the present invention is a method for assisting the comprehension of a hearing-impaired person who enjoys a service for note-taking of a speech of a speaker, the method including the steps of:
(a) receiving, from a first client terminal for use by a note-taker who takes a note, text data obtained by note-taking of the speech that was taken by the note-taker;
(b) transmitting the text data received in step (a) to a second client terminal for use by a checker who checks the note taken by the note-taker; and
(c) receiving the text data that was checked by the checker from the second client terminal and transmitting the checked text data to a third client terminal for use by the hearing-impaired person.

Moreover, in order to achieve the above-described object, a computer-readable recording medium of the present invention is a computer-readable recording medium in which a program for causing a computer to assist the comprehension of a hearing-impaired person who enjoys a service for note-taking of a speech of a speaker is recorded, the program including commands for causing the computer to execute the steps of:
(a) receiving, from a first client terminal for use by a note-taker who takes a note, text data obtained by note-taking of the speech that was taken by the note-taker;
(b) transmitting the text data received in step (a) to a second client terminal for use by a checker who checks the note taken by the note-taker; and
(c) receiving the text data that was checked by the checker from the second client terminal and transmitting the checked text data to a third client terminal for use by the hearing-impaired person.

### ADVANTAGEOUS EFFECTS OF THE INVENTION

As described above, according to the present invention, it is possible to provide a hearing-impaired person with accurate information while mitigating the load on a person who performs note-taking.

### BRIEF DESCRIPTION OF THE DRAWINGS

[Figure 1] FIG. 1 is a diagram schematically showing an overall configuration of a comprehension assistance system according to an embodiment of the present invention.
[Figure 2] FIG. 2 is a block diagram showing configurations of the comprehension assistance system and a comprehension assistance server according to the embodiment of the present invention.
[Figure 3] FIG. 3 is a flowchart showing the operation of a note-taker client that constitutes the comprehension assistance system according to the embodiment of the present invention.
[Figure 4]FIG.4 is a flowchart showing the operation of the comprehension assistance server according to the embodiment of the present invention.
[Figure 5] FIG.5 is a flowchart showing the operation of a checker client that constitutes the comprehension assistance system according to the embodiment of the present invention.
[Figure 6] FIG.6 is a diagram illustrating processing of word class decomposition by a text evaluation unit shown in FIG. 2.
[Figure 7] FIG. 7 is a diagram illustrating processing for calculating matching character strings by the text evaluation unit shown in FIG. 2.
[Figure 8] FIG. 8 is a diagram illustrating rank sorting processing by the text evaluation unit shown in FIG. 2.
[Figure 9] FIG. 9 is a diagram showing an example of a note-taker content holding list for use in the present embodiment.
[Figure 10] FIG. 10 is a diagram illustrating processing for deleting an overlapped part by an overlapped-part deletion unit shown in FIG. 2.
[Figure 11] FIG. 11 is a block diagram showing an example of a computer that realizes the comprehension assistance server according to the embodiment of the present invention.

### MODE FOR CARRYING OUT THE INVENTION

### Embodiments

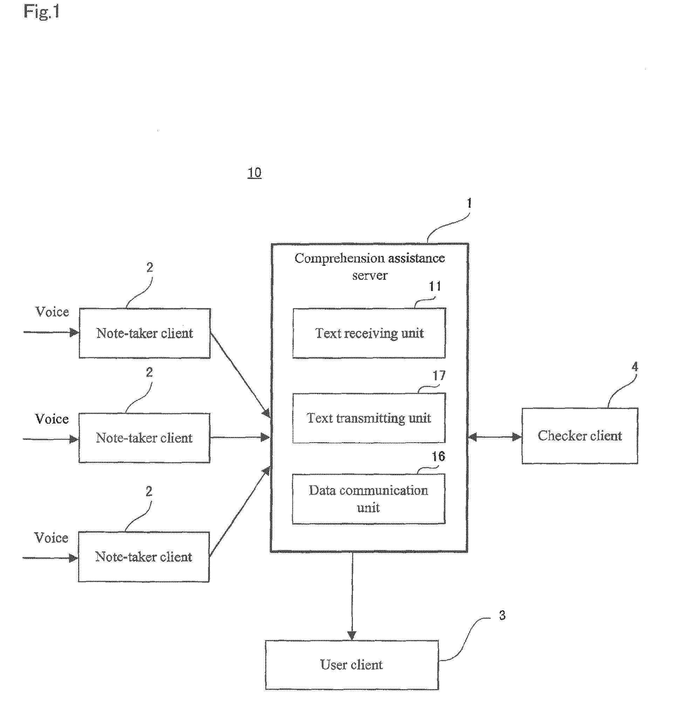

Hereinafter, a comprehension assistance system, a comprehension assistance server, a comprehension assistance method, and a program according to the embodiment of the present invention are described with reference to FIGS. 1 to 11. Note that the drawings are shown such that the same reference numerals are given to the same or equivalent parts.

### System Configuration: Overall Configuration

First, schematic configurations of the comprehension assistance system and the comprehension assistance server of the present invention will be described with reference to FIG. 1. FIG. 1 is a diagram schematically showing an overall configuration of the comprehension assistance system according to the embodiment of the present invention.

A comprehension assistance system 10 according to the present embodiment that is shown in FIG. 1 is a system that assists a hearing-impaired person (hereinafter, referred to also as a "user") in comprehending the content of note-taking when the hearing-impaired person enjoys a service for note-taking of the speech of a speaker.

As shown in FIG. 1, the comprehension assistance system 10 is provided with a comprehension assistance server 1, which is a server device, client terminals 2 for use by note-takers who take notes, a client terminal 3 for use by a user, and a client terminal 4 for use by a checker.

Here, "checker" refers to a third person who checks (that is, proofreads) the notes taken by the note-takers. Furthermore, in the following, the client terminal 3 is described as the "user client" 3. Furthermore, each client terminal 2 is described as the "note-taker client" 2. The client terminal 4 is described as the "checker client" 4.

Furthermore, as shown in FIG. 1, the comprehension assistance server 1 is provided with a text receiving unit 11, a text transmitting unit 17, and a data communication unit 16. Of them, the text receiving unit 11 receives, from the note-taker clients 2, text data obtained by the note-taking of a speech that was taken by the note-takers. Furthermore, the text transmitting unit 17 transmits the text data received by the text receiving unit 11 to the checker client 4.

Furthermore, the data communication unit 16 receives, from the checker client 4, text data that was checked by the checker, and transmits the checked text data to the user client 3. Asa result, a proofread summary is presented to the user by the user client 3.

Accordingly, the present embodiment provides a mechanism in which a checker, who is a third person, can proofread notes taken by note-takers efficiently and in real time. Therefore, according to the present embodiment, it is possible to provide a hearing-impaired person with accurate information while mitigating the load on the note-takers who take notes.

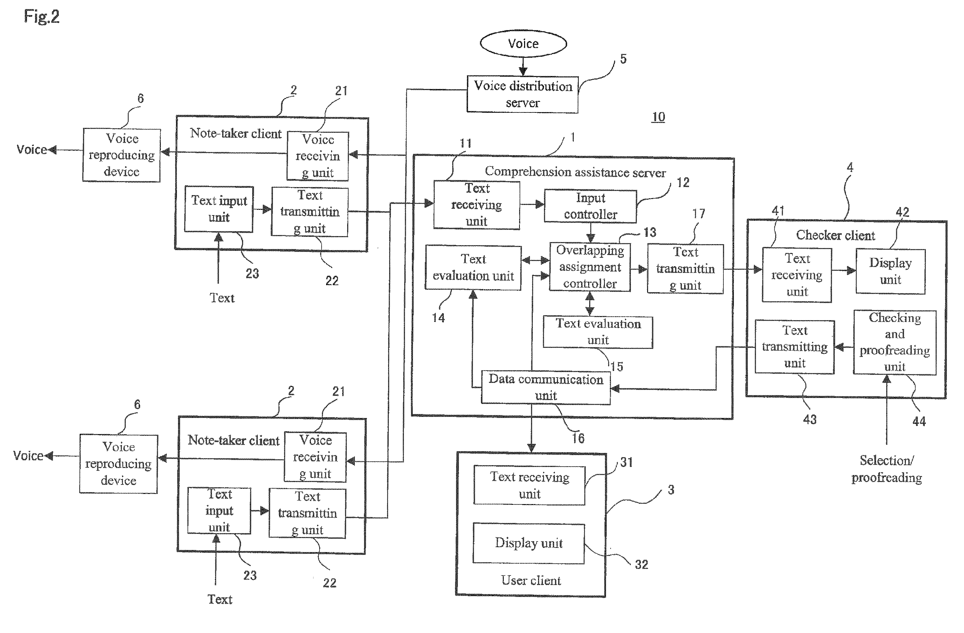

Hereinafter, the configurations of the comprehension assistance system 10 and the comprehension assistance server 1 of the present embodiment will be described further specifically with reference to FIG. 2. FIG. 2 is a block diagram showing the configurations of the comprehension assistance system and the comprehension assistance server according to the embodiment of the present invention.

First, in the present embodiment, the comprehension assistance system 10 is used in, for example, lectures at school, presentations, and the like. Also, spoken voices of speakers including a lecturer is collected as voice data to a voice distribution server 5, and are transmitted from the voice distribution server 5 to the note-taker clients 2 of the note-takers.

### System Configuration: Note-taker Client

As shown in FIG. 2, each note-taker client 2 is provided with a voice receiving unit 21, a text transmitting unit 22, and a text input unit 23. The voice receiving unit 21 receives the voice data distributed by the voice distribution server 5.

The received voice data is reproduced by a voice reproducing device 6. The voice reproducing device 6 is, for example, a speaker and the like that is provided in the note-taker client 2. Any device may be used as the voice reproducing device 6 as long as it can reproduce voice data.

Upon input of a character string by the note-taker who has heard a reproduced voice using an input device (not shown in FIG. 2), the text input unit 23 accepts the input of a character string, and inputs the accepted character string into the text transmitting unit 22. The text transmitting unit 22 transmits the input character string of the character as text data to the comprehension assistance server 1.

Furthermore, in the present embodiment, a group constituted by two or more note-takers is set for each period of time, and note-taking of the same speech is performed by the two or more note-takers constituting the same group at the same time. Therefore, an identifier for identifying the note-taker and its group is given to each note-taker client 2. Furthermore, setting of each period of time is performed such that successive periods of time partially overlap each other in order to prevent missing of the note-taking.

Furthermore, in the present embodiment, the input device of the note-taker client 2 may be a keyboard for a general-purpose computer, or may also be a 6-point keyboard that is used in the field site of note-taking, or the like. Any input device may be used as long as it can be used for a note-taker to input a character string.

### System Configuration: Comprehension Assistance Server

In the present embodiment, the comprehension assistance server 1 combines texts for each note-taker based on the note-taking result, and evaluates the combined texts. Furthermore, in order to eliminate overlapping of character strings caused by overlapping of the periods of time, the comprehension assistance server specifies overlapped character strings, and deletes the overlapped character strings. As a result, the text data is in the state of being easily checked by a checker. Then, the text data that was processed so as to easily be proofread by the checker is transmitted to the checker client 4.

Specifically, as shown in FIG. 2, the comprehension assistance server 1 is provided with, in addition to the above-described text receiving unit 11, text transmitting unit 17, and data communication unit 16, an input controller 12, an overlapping assignment controller 13, a text evaluation unit 14, and an overlapped-part deletion unit 15.

According to the present embodiment, upon receiving text data, the text receiving unit 11 inputs the received text data into the input controller 12.

The input controller 12 combines the received text data for each note-taker. In the present embodiment, as described above, a group of note-takers is set for each period of time, and thus the input controller 12 accumulates, for each of the note-takers constituting the same group, the text data received during the period of time assigned to the group of note-takers. Then, when the period of time that is assigned to the group that is currently performing note-taking ends and the completion of transmission of the text data is notified by the note-taker client 2, the input controller 12 combines the accumulated text data.

Furthermore, the input controller 12 combines the text data for each of the note-takers constituting this group and then outputs the combined text data to the overlapping assignment controller 13.

In the course of output of the combined text data of the note-takers, the overlapping assignment controller 13 outputs, when text data of all the note-takers of the group that is currently performing note-taking has been provided or when a certain period of time has elapsed, the text data to the text evaluation unit 14.

Furthermore, if different note-takers perform note-taking in respective periods of time, the overlapping assignment controller 13 obtains text data before checking (hereinafter, described as "text data before correction") that is obtained from the note-taker who performed note-taking in the previous period of time and was a target for checking.

Specifically, in the present embodiment, a group of note-takers is set for each period of time, and the text evaluation unit 14, which will be described later, selects the most appropriate text data as a note in the group, as candidate data. Therefore, the overlapping assignment controller 13 obtains text data before correction of the candidate data that is obtained from the group that has performed note-taking in the previous period of time and was a target for checking.

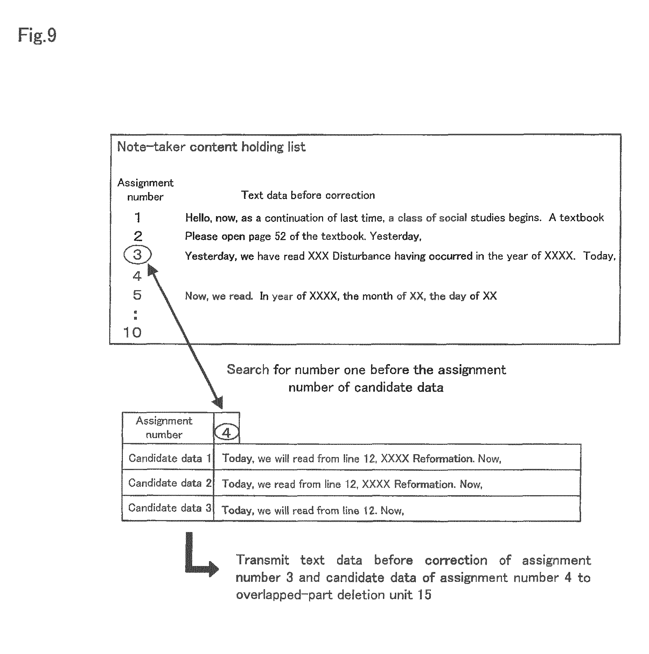

Furthermore, the overlapping assignment controller 13 gives an assignment number to the text data before correction and registers the text data before correction to which the assignment number was given into a list (hereinafter, described as a "note-taker content holding list") (see FIG. 9). Note that the assignment number will be described later. Furthermore, the overlapping assignment controller 13 determines whether or not the text data before correction is registered in the note-taker content holding list, and if the text data before correction is registered, the text data before correction and the candidate data selected by the text evaluation unit 14 are given to the overlapped-part deletion unit 15.

On the other hand, if the text data before checking is not registered in the note-taker content holding list, the overlapping assignment controller 13 lets the text transmitting unit 17 transmit the text data obtained via the input controller 12 to the checker client 4. Note that, in the present embodiment, the text data that is transmitted is candidate data that is selected by the text evaluation unit 14.

The overlapped-part deletion unit 15 compares the obtained text data before correction with text data (candidate data) obtained from the note-takers (group) that are performing note-taking in the current period of time, and deletes the overlapped part from the latter.

Specifically, the overlapped-part deletion unit 15 compares the character string that is located at the end of the sentence of the obtained text data before correction with the character string that is located at the head of the sentence of the candidate data obtained by the group that is performing note-taking in the current period of time. At that time, the comparison may only be performed for the set number of characters. Furthermore, setting of the number of characters may also be performed using a fixed value or based on the number of characters of the entire text data.

Then, the overlapped-part deletion unit 15 outputs the text data (candidate data) from which the overlapped part is deleted to the text transmitting unit 17. Accordingly, the text transmitting unit 17 transmits the text data (candidate data) from which the overlapped part is deleted to the checker client 4.

The text evaluation unit 14 obtains, from the overlapping assignment controller 13, combined text data of each of note-takers constituting the same group. Then, the text evaluation unit 14 compares these sets of text data, and selects, based on the comparison result, text data that is to be checked, for each group, as candidate data. From each group, not necessarily one set but a plurality of sets of candidate data may be selected.

Furthermore, in the present embodiment, the text evaluation unit 14 performs word class decomposition for each set of obtained combined text data, and extracts only character strings that correspond to specific word classes. Then, the text evaluation unit 14 counts, for each set of combined text data, the number of extracted character strings that match those extracted from another text data. Then, the text evaluation unit 14 uses the counted number of character strings to select the candidate data for each set of combined text data.

### System Configuration: Checker Client

As shown in FIG. 2, the checker client 4 is provided with a text receiving unit 41, a display unit 42, a text transmitting unit 43, and a checking and proofreading unit 44. Of them, the text receiving unit 41 receives the text data transmitted by the comprehension assistance server 1, specifically, the candidate data from which an overlapped part is deleted, and inputs the received text data into the display unit 42.

The display unit 42 presents the received candidate data to the checker using an output device such as a display device (not shown in FIG. 2). Furthermore, if there are a plurality of sets of candidate data for the same speech, they are all presented. Note that the checker client 4 may also be a terminal device other than a PC, such as for example, a tablet-type terminal or a smartphone, and in this case, the display device built in the terminal device serves as the output device.

The checking and proofreading unit 44 accepts an input of correction of the text data by the checker, and inputs the corrected text data into the text transmitting unit 43. Furthermore, if there are a plurality of sets of candidate data for the same speech, the checker selects any one of the sets of candidate data and then corrects the selected set of candidate data, and thus the checking and proofreading unit 44 inputs only the selected and corrected set of candidate data into the text transmitting unit 43. Note that if it is determined that the checker does not need to perform correction, the checking and proofreading unit 44 inputs the text data before correction (selected candidate data) into the text transmitting unit 43.

The text transmitting unit 43 transmits the corrected text data and the corresponding text data before correction (if selection has been made, text data before correction of the selected candidate data) to the comprehension assistance server 1. Furthermore, the text data before correction that is transmitted at that time is registered, together with the assignment number, into the note-taker content holding list by the overlapping assignment controller 13 of the comprehension assistance server 1. Furthermore, the registered text data before correction is used for deleting the overlapped part.

Furthermore, in the comprehension assistance server 1, the data transmitted from the text transmitting unit 43 is received by the data communication unit 16. At that time, the data communication unit 16 specifies the note-taker who has generated the candidate data selected by the checker in the checker client 4, and can evaluate each note-taker based on the specification result. For example, each time candidate data is selected, the data communication unit 16 adds the point of the note-taker who has generated the candidate data as an evaluation. The evaluation of the note-taker thus obtained can be used for the above-described selection of the candidate data in the text evaluation unit 14.

Furthermore, the data communication unit 16 transmits the text data corrected by the checker, of the data transmitted from the checker client 4, to the user client 3.

### System Configuration: User Client

Furthermore, as shown in FIG. 2, the user client 3 is provided with a text receiving unit 31 and a display unit 32. The text receiving unit 31 receives the text data that was corrected by the checker and transmitted from the data communication unit 16 of the comprehension assistance server 1, and inputs the received text data into the display unit 32.

The display unit 32 presents the received corrected text data to the user using an output device such as a display device (not shown in FIG. 2). Note that the user client 3 may also be a terminal device other than a PC, such as for example, a tablet-type terminal or a smartphone, and in this case, the display device built in the terminal device serves as the output device.

### System Operation

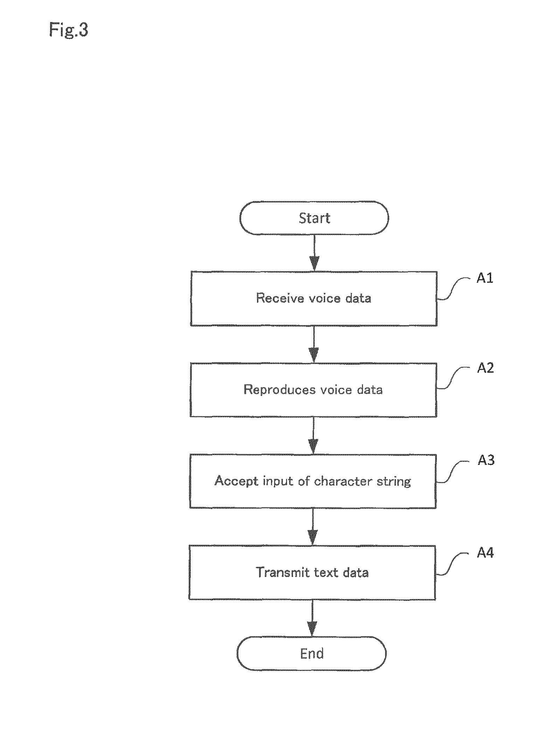

Hereinafter, the operations of the comprehension assistance system 10 and the comprehension assistance server 1 according to the embodiment of the present invention will be described with reference to FIGS. 3 to 6. In the following description, FIGS. 1 and 2 are suitably referenced. Furthermore, in the present embodiment, a comprehension assistance method is executed by operating the comprehension assistance system 10. Therefore, the description of the comprehension assistance method of the present embodiment is replaced by the following description of the operation of the comprehension assistance system 10.

### System Operation: Note-taker Client

First, the operation of the note-taker clients 2 will be described with reference to FIG. 3. FIG. 3 is a flowchart showing the operation of the note-taker clients that constitute the comprehension assistance system according to the embodiment of the present invention.

First, when a teaching is started, speakers including a lecturer emit voices, and voice data is input into the voice distribution server 5 from a microphone or the like, the voice distribution server 5 distributes the obtained voice data to the note-taker clients 2.

Then, as shown in FIG. 3, in each note-taker client 2, the voice receiving unit 21 receives the voice data (step A1), and the voice reproduction device 6 reproduces the received voice data (step A2). Accordingly, the note-taker can hear the voice emitted by the speaker.

After the execution of step A2, the note-taker starts note-taking, when having her/his turn performing note-taking, while hearing the voice of the speakers, and inputs the contents of note-taking as character strings into the text input unit 23 of the note-taker client 2 using an input device such as a keyboard.

Accordingly, the text input unit 23 accepts the input character strings, and inputs the character strings whose input was accepted into the text transmitting unit 22 as text data (step A3). Then, the text transmitting unit 22 transmits the text data to the comprehension assistance server 1 (step A4).

### System Operation: Comprehension Assistance Server

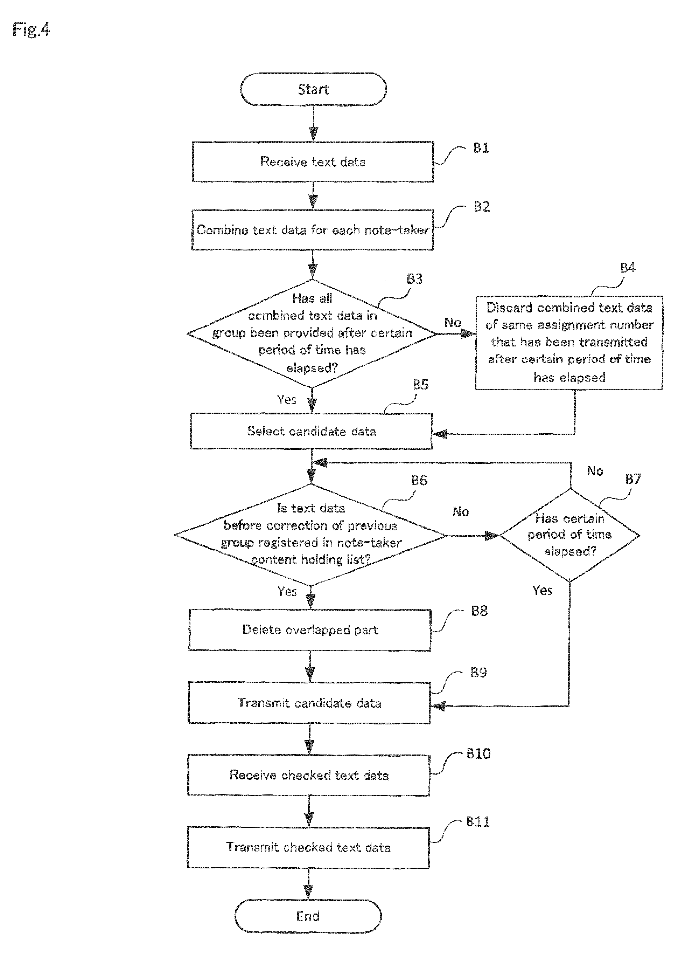

Hereinafter, the operation of the comprehension assistance server 1 will be described with reference to FIG. 4. FIG. 4 is a flowchart showing the operation of the comprehension assistance server according to the embodiment of the present invention.

As shown in FIG. 4, in the comprehension assistance server 1, first, the text receiving unit 11 receives the text data transmitted from each note-taker client 2, and then outputs the received text data to the input controller 12 (step B1).

Then, the input controller 12 combines the text data for each of the note-takers belonging to the group to which the current period of time is assigned (step B2). Specifically, the input controller 12 accumulates the text data for each note-taker during the assigned period of time until completion of transmission of the text data is notified by the note-taker client 2, and then combines the accumulated text data.

Furthermore, the input controller 12 transmits the combined text data (hereinafter, described as "combined text data") together with the assignment number to the overlapping assignment controller 13. The assignment number indicates the order of this combined text data in the entire system, and the same number is given to the combined text data that was obtained by the note-taking in the same period of time (that is, obtained from the same group).

For example, assumed that, when completion of transmission is notified by a note-taker client 2, the text data (character string) accumulated so far shows "hello", "it is a good", and "weather". In this case, the input controller 12 combines them into "Hello, it is a good weather", and the assignment number that is assigned to the group to which this note-taker belongs is given to the combined text data.

Then, the overlapping assignment controller 13 accumulates the combined text data transmitted from the input controller 12 for each group. Then, the overlapping assignment controller 13 determines, after a certain period of time has elapsed since the combined text data was first transmitted, whether or not the combined text data of all the note-takers of the group to which the current period of time is assigned has been provided (step B3).

As a result of step B3, if the combined text data of all the note-takers has been provided, the overlapping assignment controller 13 outputs the accumulated combined text data to the text evaluation unit 14. Then, step B5 is executed.

On the other hand, as a result of step B3, if the combined text data of all the note-takers has not been provided, the overlapping assignment controller 13 outputs only the combined text data that has been accumulated until now to the text evaluation unit 14. Then, the overlapping assignment controller 13 discards the combined text data that has been transmitted after the certain period of time has elapsed, that is, the combined text data to which the same assignment number is given as that of the text data that has already been output to the text evaluation unit 14 (step B4).

Then, the text evaluation unit 14 compares the sets of combined text data of the note-takers constituting the same group, and selects, based on the comparison result, the text data that is a target for checking as candidate data, for each group (step B5).

Specifically, in step B5, the text evaluation unit 14 performs word class decomposition on each set of combined text data, and extracts only character strings that correspond to specific word classes. Then, the text evaluation unit 14 counts, for each set of combined text data, the number of extracted character strings that match those extracted from another text data, and selects, using the counted number, the candidate data for each set of combined text data. Note that a specific example of step B5 will be described later.

Then, the overlapping assignment controller 13 determines whether or not text data before correction of the group (the group to which the previous period of time is assigned) that performed note-taking before the group from which the candidate data is selected in step B5 is registered in the note-taker content holding list (step B6).

In the note-taker content holding list, the text data before correction and the corresponding assignment number are registered in association with each other. According to the present embodiment, the text data before correction is candidate data, transmitted from the checker client 4, of the group to which the previous period of time is assigned, that is, the candidate data before checking that was selected by the checker. Furthermore, in the note-taker content holding list, sets of text data before correction are listed in the order of the assignment numbers. A specific example of the note-taker content holding list will be described later with reference to FIG. 9.

As a determination result of step B6, if the previous text data before correction is not registered, the overlapping assignment controller 13 determines whether or not a certain period of time has elapsed (step B7), and if a certain period of time has not elapsed, the stand-by state is realized. On the other hand, if a certain period of time has elapsed, that is, if no registration has been made also during standby state, the overlapping assignment controller 13 transmits the candidate data to the checker client 4 via the data transmitting unit 17 (step B9).

On the other hand, as a determination result of step B6, if the previous text data before correction is registered, the overlapping assignment controller 13 outputs the text data before correction and the candidate data selected by the text evaluation unit 14 to the overlapped-part deletion unit 15.

Then, the overlapped-part deletion unit 15 compares the output text data before correction with the candidate data that was also output, and deletes an overlapped part from the candidate data (step B8). Specifically, the overlapped-part deletion unit 15 compares the character string that is located at the end of the sentence of the text data before correction with the character string that is located at the head of the sentence of the candidate data obtained from the group that is performing note-taking in the current period of time, and deletes a matching character string from the candidate data. Note that a specific example of step B8 will be described later.

Then, the overlapping assignment controller 13 executes step B9. At that time, however, the candidate data transmitted to the checker client 4 is candidate data from which the overlapped part is deleted. Furthermore, when step B8 is executed, the overlapping assignment controller 13 deletes the text data before correction used in step B8 from the note-taker content holding list. This is because this text data before correction will not be used thereafter.

Then, after the execution of step B9, in the comprehension assistance server 1, the data communication unit 16 receives, from the checker client 4, the selected candidate data that was checked by the checker and the corresponding candidate data before checking (text data before correction) (step B10).

Then, the data communication unit 16 transmits the received checked candidate data and the corresponding assignment number to the user client 3 (step B11). Accordingly, in the user client 3, the corrected text data is displayed at the position on the screen that corresponds to the assignment number and is presented to the user.

Furthermore, in step B11, the data communication unit 16 inputs the received text data before correction, together with the assignment number, into the overlapping assignment controller 13. Accordingly, the overlapping assignment controller 13 registers the text data before correction into the note-taker content holding list.

Furthermore, the data communication unit 16 specifies the note-taker who has generated the candidate data that was selected by the checker in the checker client 4, and can evaluate each note-taker based on the specification result. As described above, for example, each time candidate data is selected, the data communication unit 16 adds the point of note-taker who has generated the candidate data as an evaluation.

### System Operation: Checker Client

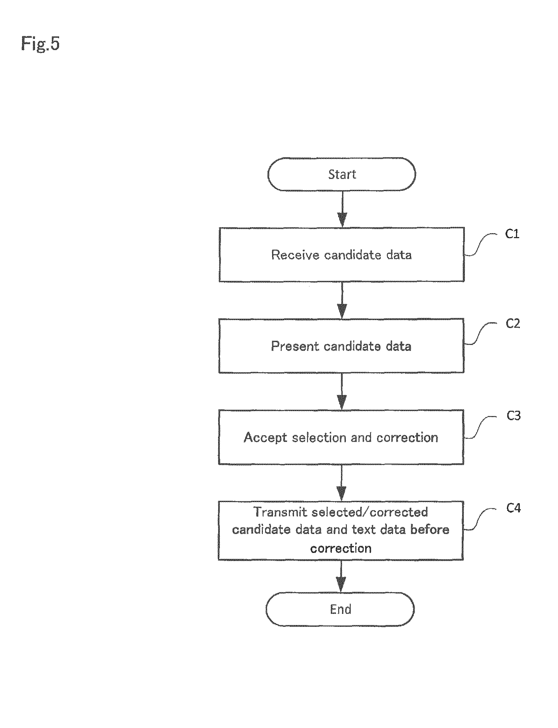

Hereinafter, the operation of the checker client 4 will be described with reference to FIG. 5. FIG. 5 is a flowchart showing the operation of the checker client constituting the comprehension assistance system according to the embodiment of the present invention.

As shown in FIG. 5, in the checker client 4, first, the text receiving unit 41 receives the candidate data transmitted from the comprehension assistance server 1 (step C1), and inputs the received candidate data into the display unit 42.

Then, the display unit 42 presents the received candidate data to the checker using an output device such as a display device (step C2). Accordingly, the checker checks the presented plurality of sets of candidate data.

Then, the checking and proofreading unit 44 accepts an input by the checker, such as a selection and correction, and inputs the checked candidate data, that is, the candidate data that was subjected to either or both of selection and correction into the text transmitting unit 43 (step C3).

Then, the text transmitting unit 43 transmits the corrected text data and the corresponding text data before correction to the comprehension assistance server 1 (step C4). The text data before correction that is transmitted at that time is registered, together with the assignment number, into the note-taker content holding list by the overlapping assignment controller 13, as described in the foregoing step B11.

### Specific example: Step B8

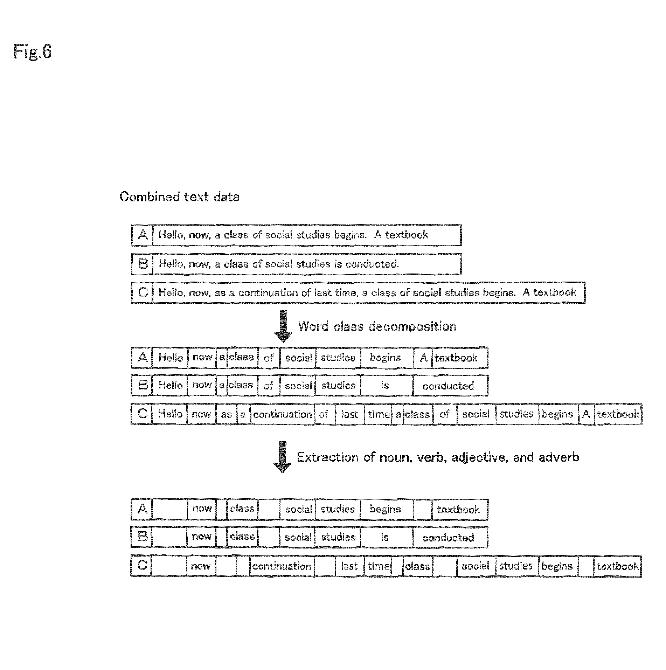

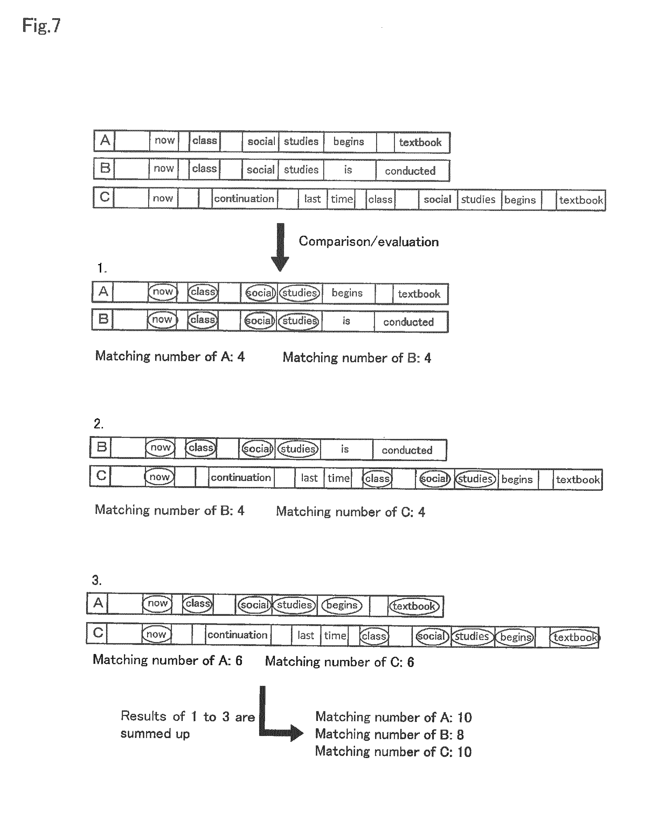

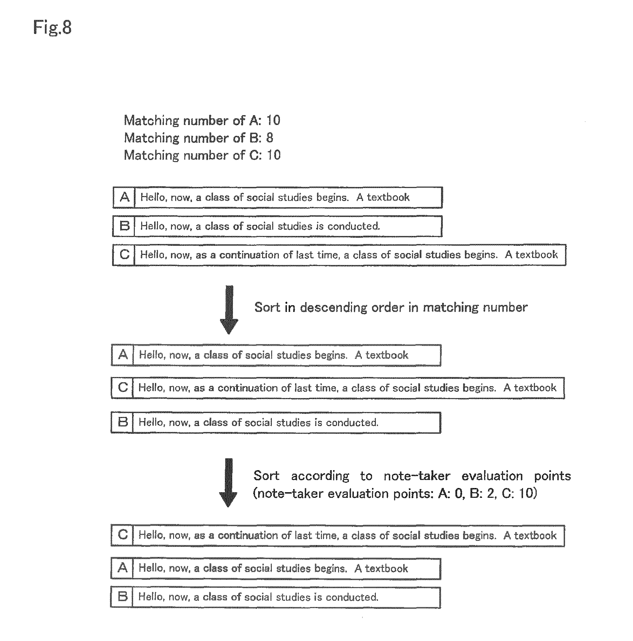

Hereinafter, step B5 shown in FIG. 4 will specifically be described with reference to FIGS. 6 to 8. FIG. 6 is a diagram illustrating processing of word class decomposition by the text evaluation unit shown in FIG. 2. FIG. 7 is a diagram illustrating processing for counting matching character strings by the text evaluation unit shown in FIG. 2. FIG. 8 is a diagram illustrating rank sorting processing by the text evaluation unit shown in FIG. 2.

As shown in FIG. 6, the text evaluation unit 14 first decomposes combined text data of note-takers A, B, and C constituting the same group into units of word class. The word class decomposition can be performed by, for example, using an existing application program that decomposes character strings into word classes upon input of the character string, for example. In the present embodiment, the method of word class decomposition is not particularly limited, and it is sufficient that the same method is used for the sets of combined text data.

Then, as shown in FIG. 6, after the decomposition, the text evaluation unit 14 extracts, from the combined text data that was decomposed into word classes, only character strings of noun, verb, adjective, and adverb.

Specifically, as shown in the upper stage of FIG. 6, note-takers A, B, and C of a group respectively input "Hello, now, a class of social studies begins. A textbook", "Hello, now, a class of social studies is conducted", and "Hello, now, as a continuation of last time, a class of social studies begins. A textbook", and the input controller 12 performs combination for each input.

Then, as shown in the middle stage of FIG. 6, the respective sets of combined text data of the note-takers A, B, and C are decomposed into word classes. In this case, the combined text data of the note-taker A is decomposed into "Hello, now, a, class, of, social, studies, begins, A, textbook". The combined text data of the note-taker B is decomposed into "Hello, now, a, class, of, social, studies, is, conducted". The combined text data of the note-taker C is decomposed into "Hello, now, as, a, continuation, of, last, time, a, class, of, social, studies, begins, A, textbook".

Then, as shown in the lower stage of FIG. 6, only character strings of noun, verb, adjective, and adverb are extracted from the combined text data that was decomposed into word classes. For example, "now, class, social, studies, begins, textbook" are extracted from the combined text data of the note-taker A. Furthermore, "now, class, social, studies, is, conducted" are extracted from the combined text data of the note-taker B. Furthermore, "now, continuation, last, time, class, social, studies, begins, textbook" are extracted from the combined text data of the note-taker C.

Then, as shown in FIG. 7, the text evaluation unit 14 compares the sets of combined text data from which character strings of the four word classes are extracted on a one-to-one basis, and counts the number of character strings that match those of another combined text data for each set of combined text data (for each note-taker). That is, the text evaluation unit 14 checks all the combinations, and sequentially sums up the number of matching character strings that is obtained from the combinations, for each set of combined text data.

Specifically, as shown in the upper stage of FIG. 7, the word classes are extracted from the respective sets of combined text data of the note-takers A, B, and C. In this case, as shown in the lower stage of FIG. 7, the comparison is performed on a one-to-one basis, and the number of matching character strings decomposed into units of word class is counted for each set of combined text data.

Note that in the example of FIG. 7, there are three note-takers A, B, and C, and thus comparison is performed three times in the combinations of A and B, B and C, and C and A. Furthermore, if there are four note-takers A, B, C, and D, comparison is performed six times in the combinations of A and B, A and C, A and D, B and C, B and D, and C and D. That is, comparison is always performed in all the combinations on a one-to-one basis.

In the example of FIG. 7, since, when A and B are compared with each other, "now", "class", "social", and "studies" match each other, the number of matching character strings of combined data of the note-taker A is counted as four, and the number of matching character strings of combined data of the note-taker B is counted as four, when A and B are compared with each other.

Since, when B and C are compared with each other, "now", "class", "social", and "studies" match each other, the number of matching character strings of combined data of the note-taker B is counted as four, and the number of matching character strings of combined data of the note-taker C is counted as four, when B and C are compared with each other.

Furthermore, when A and C are compared with each other, "now", "class", "social", "studies", "begins", and "textbook" match each other, the number of matching character strings of combined data of the note-taker A is counted as six, and the number of matching character strings of combined data of the note-taker C is counted as six, when A and C are compared with each other.

Then, by summing up the results counted for the combinations, the result shown in the lowermost stage of FIG. 7 is obtained. That is, in the combined data of the note-taker A, the number of matching character strings is calculated as 4 + 6 = 10. In the combined data of the note-taker B, the number of matching character strings is calculated as 4 + 4 = 8. Furthermore, the combined data of the note-taker C, the number of matching character strings is calculated as 4 + 6 = 10.

Then, as shown in the middle stage of FIG. 8, the text evaluation unit 14 ranks the combined text data of the note-takers in the descending order of the calculated numbers of matching character strings, and sort them. Note that in the example of FIG. 8, sorting has not been performed in the state in which word class decomposition is performed, and the character strings are sorted in the state of being received. That is, sorting is performed such that the combined text data having the largest number of matching character strings appears at first and the combined text data having the least number of matching character strings appears at last.

Furthermore, in the sorting according to the number of matching character strings, if there are combined text data that have the same number of matching character strings, the text evaluation unit 14 references, as shown in the lower stage of FIG. 8, the evaluation points of the note-takers transmitted from the data communication unit 16, and sorts the combined text data having the same number of matching character strings in the descending order of evaluations.

In the present example, as described above, the evaluation point is obtained by, for example, the data communication unit 16 incrementing, each time candidate data is selected, the point of the note-taker who has generated the candidate data by one, and storing it. That is, when the candidate data generated by the note-taker A is selected by the checker, the data communication unit 16 increments by one the evaluation point of the note-taker A.

Specifically, in the example of FIG. 8, the note-takers A, B, and C have the evaluation points of A: 0, B: 2, and C: 10, and C is most evaluated by the checker. Accordingly, the combined text data are sorted such that the combined text data of the note-taker C is ranked top, ultimately as shown in the lower stage of FIG. 8.

Then, after completion of the sorting, the text evaluation unit 14 selects the arbitrary number of combined text data as candidate data in the descending order, and returns the selected candidate data to the overlapping assignment controller 13. Note that the number of sets of candidate data that are to be selected may be defined according to the number of note-takers constituting a group or may be a fixed value. Furthermore, the text evaluation unit 14 discards the combined text data that was not selected since it will not be used thereafter.

### Specific Example: Step B8

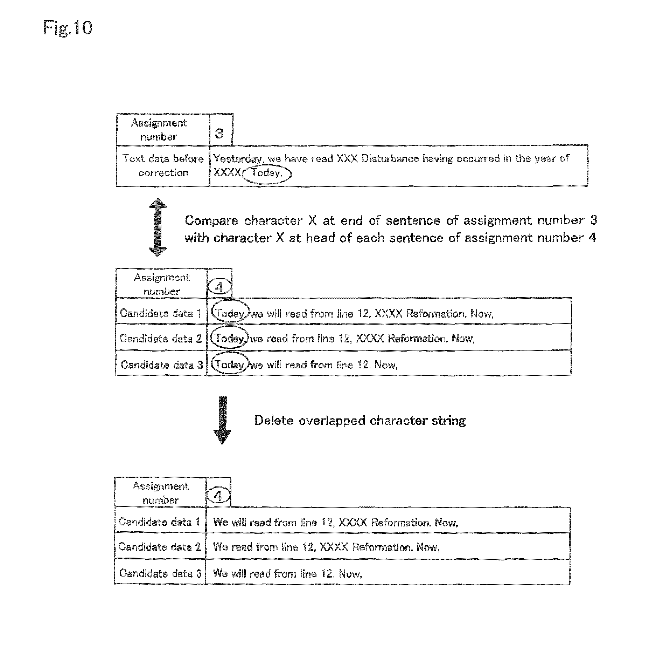

Hereinafter, steps B6 and B8 shown in FIG. 4 will specifically be described with reference to FIGS. 9 and 10. FIG. 9 is a diagram showing an example of the note-taker content holding list for use in the present embodiment. FIG. 10 is a diagram illustrating processing for deleting an overlapped part by the overlapped-part deletion unit shown in FIG. 2.

In step B6, the overlapping assignment controller 13 determines whether or not text data before correction that is obtained from the group that has performed note-taking before the group from which the candidate data is selected in step B5 is registered in the note-taker content holding list shown in FIG. 9. As shown in FIG. 9, in the note-taker content holding list, the text data before correction (candidate data before correction) selected by the checker and its assignment number are registered.

Specifically, as shown in FIG. 9, if the assignment number of the current candidate data is 4, the overlapping assignment controller 13 searches for 3 that is one assignment number before 4 from the note-taker content holding list. If the assignment number 3 and its text data before correction are registered, the overlapping assignment controller 13 transmits the text data before correction of the assignment number 3 and the candidate data of the assignment number 4 to the overlapped-part deletion unit 15.

Then, as shown in FIG. 10, the overlapped-part deletion unit 15 compares the text data before correction with the candidate data. Then, the overlapped-part deletion unit 15 compares a given number of character strings at the end of the text data before correction with a given number of character strings at the head of the candidate data, and deletes the matching character strings from each set of candidate data.

Specifically, the overlapped-part deletion unit 15 compares the character string at the end of the sentence of the text data before correction of the assignment number 3 with the character string at the head of the sentence of the candidate data of the assignment number 4. Then, the overlapped-part deletion unit 15 deletes the overlapped character string "Today" from each set of candidate data.

Then, the overlapped-part deletion unit 15 returns the candidate data from which the overlapped part is deleted, together with its assignment number, to the overlapping assignment controller 13.

### Effects of Embodiment

As described above, in the present embodiment, the text data that is to be presented to a user is selected from the text data obtained by note-taking, with the information amount, whether or not important character string is missed, reliability of the checker, and the like taken into consideration.

Furthermore, even if there is the overlapped character string in the text data input by the note-takers due to overlapping of the periods of time to which note-taking is assigned, the text data from which the overlapped part is deleted is presented to the checker. Therefore, the correction by the checker becomes easy, and the load on the checker is mitigated, further reducing the cost needed for the operation of the system.

Additionally, in the present embodiment, input performed in cooperation among a plurality of note-takers is easy, resulting in efficient note-taking. Furthermore, since the mechanism in which a checker can proofread is achieved, a hearing-impaired person can be provided with high accurate information even in the case of only beginners in note-taking who have a difficulty in performing note-taking alone, and as a result, it is possible to solve the shortage of note-takers.

### Modification

The above-described example has described such that note-taking is performed by a group of note-takers, but the present embodiment is not limited to this. The present embodiment may relate to an example in which note-takers perform note-taking individually by rotation, and a checker performs proofreading for the note-takers one by one.

Furthermore, in the present embodiment, in order to prevent missing of note-taking, processing is performed in which periods of time are overlapped and an overlapped part of text data is deleted, but the present embodiment is not limited to this example. For example, if note-takers are experienced skilled persons and there is no need to overlap periods of time, the processing for deleting the overlapped part is omitted. Furthermore, in the present embodiment, if note-takers are experienced persons, a configuration is also possible in which the note-takers perform note-taking individually by rotation, and a checker performs proofreading for the note-takers one by one.

### Program

A program according to the present embodiment may be a program for causing a computer to execute steps B1 to B11 shown in FIG. 4. By installing this program into the computer and the computer executing the program, it is possible to realize the comprehension assistance server 1 of the present embodiment. In this case, a Central Processing Unit (CPU) of the computer functions as the text receiving unit 11, the input controller 12, the overlapping assignment controller 13, the text evaluation unit 14, the overlapped-part deletion unit 15, the data communication unit 16, and the text transmitting unit 17 to perform corresponding processing.

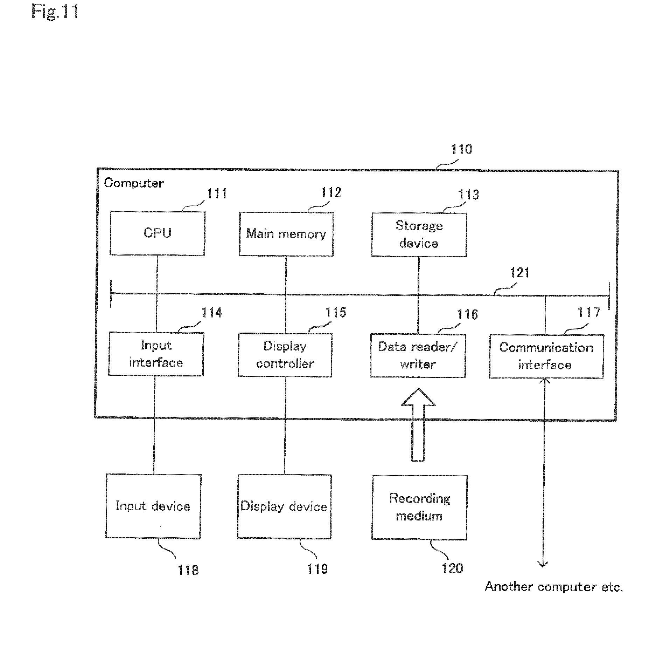

Here, the computer that realize the comprehension assistance server 1 by executing the program according to the present embodiment will be described with reference to FIG. 11. FIG. 11 is a block diagram showing an example of the computer that realizes the comprehension assistance server according to the embodiment of the present invention.

As shown in FIG. 11, a computer 110 is provided with a CPU 111, a main memory 112, a storage device 113, an input interface 114, a display controller 115, a data reader/writer 116, and a communication interface 117. These units are connected to each other via a bus 121 so as to enable data communication.

The CPU 111 executes various types of operation by expanding programs (codes) of the present embodiment stored in the storage device 113 onto the main memory 112 and executing the programs in a predetermined order. Typically, the main memory 112 is a volatile storage device such as a Dynamic Random Access Memory (DRAM). Furthermore, the programs in the present embodiment are provided in the state of being stored in a computer-readable recording medium 120. Note that the programs of the present embodiment may also be programs distributed in the Internet connected via the communication interface 117.

Furthermore, specific examples of the storage device 113 include, in addition to a hard disk, a semiconductor storage device such as a flash memory. The input interface 114 intermediates data transmission between the CPU 111 and the input device 118 such as a keyboard and a mouse. The display controller 115 is connected to the display device 119 to control display of the display device 119.

The data reader/writer 116 intermediates data transmission between the CPU 111 and the recording medium 120, and executes reading of the programs from the recording medium 120 and writing of processing results of the computer 110 into the recording medium 120. The communication interface 117 intermediates data transmission between the CPU 111 and another computer.

Furthermore, specific examples of the recording medium 120 include a general-purpose semiconductor memory device such as a CF (Compact Flash (registered trademark)) and an SD (Secure Digital), a magnetic storage medium such as a flexible disk, or an optical storage medium such as a CD-ROM (Compact Disk Read Only Memory).

Part or entire of the foregoing embodiment can be expressed by the following (Supplementary note 1) to (Supplementary note 15), but the present invention is not limited to the following description.

### (Supplementary note 1)

A comprehension assistance system for assisting the comprehension of a hearing-impaired person who enjoys a service for note-taking of a speech of a speaker, the comprehension assistance system including:
a server device; a first client terminal for use by a note-taker who takes a note; a second client terminal for use by a checker who checks the note taken by the note-taker; and a third client terminal for use by the hearing-impaired person,
wherein the server device includes:
   a text receiving unit configured to receive, from the first client terminal, text data obtained by note-taking of the speech that was taken by the note-taker;
   a text transmitting unit configured to transmit the received text data to the second client terminal; and
   a data communication unit configured to receive the text data checked by the checker from the second client terminal, and transmit the checked text data to the third client terminal.

### (Supplementary note 2)

The comprehension assistance system according to supplementary note 1,
wherein the server device further includes:
an overlapping assignment controller configured to acquire, when note-taking is performed by different note-takers for each period of time, text data before checking that is obtained from a note-taker who had performed note-taking in a previous period of time and was a target for checking; and
an overlapped-part deletion unit configured to compare the acquired text data before checking with text data obtained by a note-taker who is performing note-taking in the current period of time, and to delete an overlapped part from the latter,
wherein the text transmitting unit transmits, to the second client terminal, the text data that is obtained by the note-taker who is performing note-taking in the current period of time and from which the overlapped part is deleted.

### (Supplementary note 3)

The comprehension assistance system according to supplementary note 2, wherein the server device further includes:
an input controller configured to combine, when note-taking is performed by a group constituted by two or more of note-takers at the same time with respect to the same speech for each period of time, the received text data for each of the note-takers constituting the same group; and
a text evaluation unit configured to compare the sets of combined text data of the note-takers constituting the same group, and selects, based on the comparison result, text data that is to be checked as candidate data, for each group,
wherein the overlapping assignment controller acquires text data before checking of the candidate data that is obtained from the group that performed note-taking in a previous period of time and was a target for checking,
the overlapped-part deletion unit compares the acquired text data before checking with the candidate data of the group that is performing note-taking in the current period of time, and deletes an overlapped part from the latter, and
the text transmitting unit transmits, to the second client terminal, the candidate data of the group that is performing note-taking in the current period of time and from which the overlapped part was deleted.

### (Supplementary note 4)

The comprehension assistance system according to supplementary note 3,
wherein the input controller accumulates, for each note-taker, the text data received during the period of time assigned to the group of the note-taker, and combines the accumulated text data when being notified of completion of transmission of the text data by the first client terminal.

### (Supplementary note 5)

The comprehension assistance system according to supplementary note 3 or 4,
wherein the text evaluation unit acquires the combined text data of each of the note-takers constituting the same group, performs word class decomposition for each set of the acquired combined text data, extracts only character strings that correspond to a specific word class, calculates the number of character strings that match character strings extracted from another text data, of the character strings extracted from the text data, and selects candidate data using the number calculated for each combined text data.

### (Supplementary note 6)

The comprehension assistance system according to any one of appendices 2 to 5,
wherein the overlapping assignment controller holds a list in which the acquired text data before checking is registered, and, if the text data before checking is registered in the list, the overlapping assignment controller gives the text data before checking to the overlapped-part deletion unit and, if the text data before checking is not registered in the list, the overlapping assignment controller lets the text transmitting unit transmit the received text data to the second client terminal.

### (Supplementary note 7)

The comprehension assistance system according to any one of appendices 2 to 6,
wherein the overlapped-part deletion unit compares a character string that is located at the end of a sentence of the acquired text data before checking with a character string that is located at the head of a sentence of the text data obtained by a note-taker who is performing note-taking in the current period of time.

### (Supplementary note 8)

The comprehension assistance system according to supplementary note 1,
wherein the server device further includes:
an input controller configured to combine, when note-taking is performed with respect to the same speech by a plurality of note-takers at the same time, the received text data for each of the plurality of note-takers; and
a text evaluation unit configured to compare the sets of combined text data of the plurality of note-takers, and selects, based on the comparison result, text data that is to be checked, as candidate data.

### (Supplementary note 9)

A comprehension assistance server for assisting the comprehension of a hearing-impaired person who enjoys a service for note-taking of a speech of a speaker, the comprehension assistance server including:
a text receiving unit configured to receive, from a first client terminal for use by a note-taker who takes a note, text data obtained by note-taking of the speech that was taken by the note-taker;
a text transmitting unit configured to transmit the received text data to a second client terminal for use by a checker who checks the note taken by the note-taker; and
a data communication unit configured to receive the text data that was checked by the checker from the second client terminal, and transmit the checked text data to a third client terminal for use by the hearing-impaired person.

### (Supplementary note 10)

The comprehension assistance server according to supplementary note 9, further includes:
an overlapping assignment controller configured to acquire, when note-taking is performed by different note-takers for each period of time, text data before checking that is obtained from a note-taker who had performed note-taking in a previous period of time and was a target for checking; and
an overlapped-part deletion unit configured to compare the acquired text data before checking with text data obtained by a note-taker who is performing note-taking in the current period of time, and to delete an overlapped part from the latter,
wherein the text transmitting unit transmits, to the second client terminal, the text data that is obtained by the note-taker who is performing note-taking in the current period of time and from which the overlapped part is deleted.

### (Supplementary note 11)

The comprehension assistance server according to supplementary note 10, further includes:
an input controller configured to combine, when note-taking is performed by a group constituted by two or more of note-takers at the same time with respect to the same speech for each period of time, the received text data for each of the note-takers constituting the same group; and
a text evaluation unit configured to compare the sets of combined text data of the note-takers constituting the same group, and selects, based on the comparison result, text data that is to be checked as candidate data, for each group,
wherein the overlapping assignment controller acquires text data before checking of the candidate data that is obtained from the group that performed note-taking in a previous period of time and was a target for checking,
the overlapped-part deletion unit compares the acquired text data before checking with the candidate data of the group that is performing note-taking in the current period of time, and deletes an overlapped part from the latter, and
the text transmitting unit transmits, to the second client terminal, the candidate data of the group that is performing note-taking in the current period of time and from which the overlapped part was deleted.

### (Supplementary note 12)

The comprehension assistance server according to supplementary note 11,
wherein the input controller accumulates, for each note-taker, the text data received during the period of time assigned to the group of the note-taker, and combines the accumulated text data when being notified of completion of transmission of the text data by the first client terminal.

### (Supplementary note 13)

The comprehension assistance server according to supplementary note 11 or 12,
wherein the text evaluation unit acquires the combined text data of each of the note-takers constituting the same group, performs word class decomposition for each set of the acquired combined text data, extracts only character strings that correspond to a specific word class, calculates the number of character strings that match character strings extracted from another text data of the character strings extracted from the text data, and selects candidate data using the number calculated for each combined text data.

### (Supplementary note 14)

The comprehension assistance server according to any one of supplementary note 10 to 13,
wherein the overlapping assignment controller holds a list in which the acquired text data before checking is registered, and, if the text data before checking is registered in the list, the overlapping assignment controller gives the text data before checking to the overlapped-part deletion unit and, if the text data before checking is not registered in the list, the overlapping assignment controller lets the text transmitting unit transmit the received text data to the second client terminal.

### (Supplementary note 15)

The comprehension assistance server according to any one of supplementary note 10 to 14,
wherein the overlapped-part deletion unit compares a character string that is located at the end of a sentence of the acquired text data before checking with a character string that is located at the head of a sentence of the text data obtained by a note-taker who is performing note-taking in the current period of time.

### (Supplementary note 16)

The comprehension assistance server according to supplementary note 9, further including:
an input controller configured to combine, when note-taking is performed with respect to the same speech by a plurality of note-takers at the same time, the received text data for each of the plurality of note-takers; and
a text evaluation unit configured to compare the sets of combined text data of the plurality of note-takers, and selects, based on the comparison result, text data that is to be checked, as candidate data.

### (Supplementary note 17)

A comprehension assistance method for assisting the comprehension of a hearing-impaired person who enjoys a service for note-taking of a speech of a speaker, the method including the steps of:
(a) receiving, from a first client terminal for use by a note-taker who takes a note, text data obtained by note-taking of the speech that was taken by the note-taker;
(b) transmitting the text data received in step (a) to a second client terminal for use by a checker who checks the note taken by the note-taker; and
(c) receiving the text data that was checked by the checker from the second client terminal and transmitting the checked text data to a third client terminal for use by the hearing-impaired person.

### (Supplementary note 18)

The comprehension assistance method according to supplementary note 17, further including the steps of:
(d) acquiring, when note-taking is performed by different note-takers for each period of time, text data before checking that is obtained from a note-taker who had performed note-taking in a previous period of time and was a target for checking; and
(e) comparing the text data before checking acquired in step (d) with text data obtained by a note-taker who is performing note-taking in the current period of time, and to delete an overlapped part from the latter,
wherein in step (b), the text data that is obtained by the note-taker who is performing note-taking in the current period of time and from which the overlapped part is deleted is transmitted to the second client terminal.

### (Supplementary note 19)

The comprehension assistance method according to supplementary note 18, further including the steps of:
(f) combining, when note-taking is performed by a group constituted by two or more of note-takers at the same time with respect to the same speech for each period of time, the received text data for each of the note-takers constituting the same group; and
(g) comparing the combined text data of the note-takers constituting the same group, and selects, based on the comparison result, text data that is to be checked as candidate data, for each group,
wherein in step (d), text data before checking of the candidate data that is obtained from the group that performed note-taking in a previous period of time and was a target for checking is acquired, and
in step (e), the text data before checking acquired in step (d) is compared with the candidate data of the group that is performing note-taking in the current period of time, and an overlapped part is deleted from the latter, and
in step (b), the candidate data of the group that is performing note-taking in the current period of time and from which the overlapped part was deleted is transmitted to the second client terminal.

### (Supplementary note 20)

The comprehension assistance method according to supplementary note 19,
wherein in step (f), the text data received during the period of time assigned to the group of the note-taker is accumulated for each note-taker, and the accumulated text data is combined when being notified of completion of transmission of the text data by the first client terminal.

### (Supplementary note 21)

The comprehension assistance method according to supplementary note 19 or 20,
wherein in the step (g), the combined text data of each of the note-takers constituting the same group is acquired, word class decomposition is performed for each set of the acquired combined text data, only character strings that correspond to a specific word class are extracted, the number of character strings that match character strings extracted from another text data, of the character strings extracted from the text data, are calculated, and candidate data is selected using the number calculated for each combined text data.

### (Supplementary note 22)

The comprehension assistance method according to any one of appendices 18 to 21,
wherein, in step (d), a list in which the acquired text data before checking is registered is used, and, if the text data before checking is registered in the list, the text data before checking is used to execute step (e), and
if the text data before checking is not registered in the list, the received text data is transmitted to the second client terminal in step (b).

### (Supplementary note 23)

The comprehension assistance method according to any one of appendices 18 to 22,
wherein in the step (e), a character string that is located at the end of a sentence of the obtained text data before checking is compared with a character string that is located at the head of a sentence of the text data obtained by a note-taker who is performing note-taking in the current period of time.

### (Supplementary note 24)

The comprehension assistance method according to supplementary note 17, further comprising the steps of:
(h) combining, when note-taking is performed with respect to the same speech by a plurality of note-takers at the same time, the received text data for each of the plurality of note-takers; and
(i) comparing the combined text data of the plurality of note-takers, and selects, based on the comparison result, text data that is to be checked, as candidate data.

### (Supplementary note 25)

A computer-readable recording medium in which a program for causing a computer to assist the comprehension of a hearing-impaired person who enjoys a service for note-taking of a speech of a speaker is recorded, the program including commands for causing the computer to execute the steps of:
(a) receiving, from a first client terminal for use by a note-taker who takes a note, text data obtained by note-taking of the speech that was taken by the note-taker;
(b) transmitting the text data received in step (a) to a second client terminal for use by a checker who checks the note taken by the note-taker; and
(c) receiving the text data that was checked by the checker from the second client terminal and transmitting the checked text data to a third client terminal for use by the hearing-impaired person.

### (Supplementary note 26)

The computer-readable recording medium according to supplementary note 25,
wherein the program includes commands for further causing the computer to execute the steps of:
(d) acquiring, when note-taking is performed by different note-takers for each period of time, text data before checking that is obtained from a note-taker who had performed note-taking in a previous period of time and was a target for checking; and
(e) comparing the text data before checking acquired in step (d) with text data obtained by a note-taker who is performing note-taking in the current period of time, and to delete an overlapped part from the latter,
wherein in step (b), the text data that is obtained by the note-taker who is performing note-taking in the current period of time and from which the overlapped part is deleted is transmitted to the second client terminal.

### (Supplementary note 27)

The computer-readable recording medium according to supplementary note 26,
wherein the program includes commands for further causing the computer to execute the steps of:
(f) combining, when note-taking is performed by a group constituted by two or more of note-takers at the same time with respect to the same speech for each period of time, the received text data for each of the note-takers constituting the same group; and
(g) comparing the combined text data of the note-takers constituting the same group, and selects, based on the comparison result, text data that is to be checked as candidate data, for each group,
wherein in step (d), text data before checking of the candidate data that is obtained from the group that performed note-taking in a previous period of time and was a target for checking is acquired, and
in step (e), the text data before checking acquired in step (d) is compared with the candidate data of the group that is performing note-taking in the current period of time, and an overlapped part is deleted from the latter, and
in step (b), the candidate data of the group that is performing note-taking in the current period of time and from which the overlapped part was deleted is transmitted to the second client terminal.

### (Supplementary note 28)

The computer-readable recording medium according to supplementary note 27,
wherein in step (f), the text data received during the period of time assigned to the group of the note-taker is accumulated for each note-taker, and the accumulated text data is combined when being notified of completion of transmission of the text data by the first client terminal.

### (Supplementary note 29)

The computer-readable recording medium according to supplementary note 27 or 28,
wherein in the step (g), the combined text data of each of the note-takers constituting the same group is acquired, word class decomposition is performed for each set of the acquired combined text data, only character strings that correspond to a specific word class are extracted, the number of character strings that match character strings extracted from another text data, of the character strings extracted from the text data, are calculated, and candidate data is selected using the number calculated for each combined text data.

### (Supplementary note 30)

The computer-readable recording medium according to any one of appendices 26 to 29,
wherein, in step (d), a list in which the acquired text data before checking is registered is used, and, if the text data before checking is registered in the list, the text data before checking is used to execute step (e), and
if the text data before checking is not registered in the list, the received text data is transmitted to the second client terminal in step (b).

### (Supplementary note 31)

The computer-readable recording medium according to any one of appendices 26 to 30,
wherein in the step (e), a character string that is located at the end of a sentence of the obtained text data before checking is compared with a character string that is located at the head of a sentence of the text data obtained by a note-taker who is performing note-taking in the current period of time.

### (Supplementary note 32)

The computer-readable recording medium according to supplementary note 25,
wherein the program includes commands for further causing the computer to execute the steps of:
(h) combining, when note-taking is performed with respect to the same speech by a plurality of note-takers at the same time, the received text data for each of the plurality of note-takers; and
(i) comparing the combined text data of the plurality of note-takers, and selects, based on the comparison result, text data that is to be checked, as candidate data.

Although the present invention has been described with reference to the embodiment, the present invention is not limited to the foregoing embodiment. The configuration and details of the present invention can be modified in various ways comprehendible by a person skilled in the art within the scope of the present invention.

This application is based upon and claims the benefit of priority from Japanese Patent Application No. 2013-044977, filed March 7, 2013, the disclosure of which is incorporated herein in its entirety by reference.

### INDUSTRIAL APPLICABILITY

As described above, according to the present invention, it is possible to provide a hearing-impaired person with accurate information while mitigating the load on a person who performs note-taking. The present invention is advantageous in the field in which assistance for a hearing-impaired person is needed.

### REFERENCE SIGNS LIST

- 1: Comprehension assistance server
- 2: Note-taker client
- 3: User client
- 4: Checker client
- 5: Voice distribution server
- 6: Voice reproduction device
- 10: Comprehension assistance system
- 11: Text receiving unit
- 12: Input controller
- 13: Overlapping assignment controller
- 14: Text evaluation unit
- 15: Overlapped-part deletion unit
- 16: Data communication unit
- 17: Text transmitting unit
- 21: Voice receiving unit
- 22: Text transmitting unit
- 23: Text input unit
- 31: Text receiving unit
- 32: Display unit
- 41: Text receiving unit
- 42: Display unit
- 43: Text transmitting unit
- 44: Checking and proofreading unit
- 110: Computer
- 111: CPU
- 112: Main memory
- 113: Storage device
- 114: Input interface
- 115: Display controller
- 116: Data reader/writer
- 117: Communication interface
- 118: Input device
- 119: Display device
- 120: Recording medium
- 121: Bus

## Claims

1. A comprehension assistance system for assisting the comprehension of a hearing-impaired person who enjoys a service for note-taking of a speech of a speaker, the comprehension assistance system comprising:
a server device; a first client terminal for use by a note-taker who takes a note; a second client terminal for use by a checker who checks the note taken by the note-taker; and a third client terminal for use by the hearing-impaired person,
wherein the server device includes:
a text receiving unit configured to receive, from the first client terminal, text data obtained by note-taking of the speech that was taken by the note-taker;
a text transmitting unit configured to transmit the received text data to the second client terminal; and
a data communication unit configured to receive the text data checked by the checker from the second client terminal, and transmit the checked text data to the third client terminal.

2. The comprehension assistance system according to claim 1,
wherein the server device further includes:
an overlapping assignment controller configured to acquire, when note-taking is performed by different note-takers for each period of time, text data before checking that is obtained from a note-taker who had performed note-taking in a previous period of time and was a target for checking; and
an overlapped-part deletion unit configured to compare the acquired text data before checking with text data obtained by a note-taker who is performing note-taking in the current period of time, and to delete an overlapped part from the latter,
wherein the text transmitting unit transmits, to the second client terminal, the text data that is obtained by the note-taker who is performing note-taking in the current period of time and from which the overlapped part is deleted.

3. The comprehension assistance system according to claim 2,
wherein the server device further includes:
an input controller configured to combine, when note-taking is performed by a group constituted by two or more of note-takers at the same time with respect to the same speech for each period of time, the received text data for each of the note-takers constituting the same group; and
a text evaluation unit configured to compare the sets of combined text data of the note-takers constituting the same group, and selects, based on the comparison result, text data that is to be checked as candidate data, for each group,
wherein the overlapping assignment controller acquires text data before checking of the candidate data that is obtained from the group that performed note-taking in a previous period of time and was a target for checking,
the overlapped-part deletion unit compares the acquired text data before checking with the candidate data of the group that is performing note-taking in the current period of time, and deletes an overlapped part from the latter, and
the text transmitting unit transmits, to the second client terminal, the candidate data of the group that is performing note-taking in the current period of time and from which the overlapped part was deleted.

4. The comprehension assistance system according to claim 3,
wherein the input controller accumulates, for each note-taker, the text data received during the period of time assigned to the group of the note-taker, and combines the accumulated text data when being notified of completion of transmission of the text data by the first client terminal.

5. The comprehension assistance system according to claim 3 or 4,
wherein the text evaluation unit acquires the combined text data of each of the note-takers constituting the same group, performs word class decomposition for each set of the acquired combined text data, extracts only character strings that correspond to a specific word class, calculates the number of character strings that match character strings extracted from another text data, of the character strings extracted from the text data, and selects candidate data using the number calculated for each combined text data.

6. The comprehension assistance system according to any one of claims 2 to 5,
wherein the overlapping assignment controller holds a list in which the acquired text data before checking is registered, and, if the text data before checking is registered in the list, the overlapping assignment controller gives the text data before checking to the overlapped-part deletion unit and, if the text data before checking is not registered in the list, the overlapping assignment controller lets the text transmitting unit transmit the received text data to the second client terminal.

7. The comprehension assistance system according to any one of claims 2 to 6,
wherein the overlapped-part deletion unit compares a character string that is located at the end of a sentence of the acquired text data before checking with a character string that is located at the head of a sentence of the text data obtained by a note-taker who is performing note-taking in the current period of time.

8. A comprehension assistance server for assisting the comprehension of a hearing-impaired person who enjoys a service for note-taking of a speech of a speaker, the comprehension assistance server including:
a text receiving unit configured to receive, from a first client terminal for use by a note-taker who takes a note, text data obtained by note-taking of the speech that was taken by the note-taker;
a text transmitting unit configured to transmit the received text data to a second client terminal for use by a checker who checks the note taken by the note-taker; and
a data communication unit configured to receive the text data that was checked by the checker from the second client terminal, and transmit the checked text data to a third client terminal for use by the hearing-impaired person.

9. A method for assisting the comprehension of a hearing-impaired person who enjoys a service for note-taking of a speech of a speaker, the method including the steps of:
(a) receiving, from a first client terminal for use by a note-taker who takes a note, text data obtained by note-taking of the speech that was taken by the note-taker;
(b) transmitting the text data received in step (a) to a second client terminal for use by a checker who checks the note taken by the note-taker; and
(c) receiving the text data that was checked by the checker from the second client terminal and transmitting the checked text data to a third client terminal for use by the hearing-impaired person.

10. The computer-readable recording medium in which a program for causing a computer to assist the comprehension of a hearing-impaired person who enjoys a service for note-taking of a speech of a speaker is recorded, the program including commands for causing the computer to execute the steps of:
(a) receiving, from a first client terminal for use by a note-taker who takes a note, text data obtained by note-taking of the speech that was taken by the note-taker;
(b) transmitting the text data received in step (a) to a second client terminal for use by a checker who checks the note taken by the note-taker; and
(c) receiving the text data that was checked by the checker from the second client terminal and transmitting the checked text data to a third client terminal for use by the hearing-impaired person.
